Europäisches Patentamt

European Patent Office

Office européen des brevets

(11) Veröffentlichungsnummer: **0 148 281**
**B1**

(12) **EUROPÄISCHE PATENTSCHRIFT**

(45) Veröffentlichungstag der Patentschrift: **15.06.88**

(21) Anmeldenummer: **83112598.4**

(22) Anmeldetag: **15.12.83**

(51) Int. Cl.⁴: **D 05 B 19/00** // G05B19/405, G05B19/41, G11C11/34

(54) **Elektronische Steuereinrichtung für Industrienähmaschinen.**

(43) Veröffentlichungstag der Anmeldung:
**17.07.85 Patentblatt 85/29**

(45) Bekanntmachung des Hinweises auf die Patenterteilung:
**15.06.88 Patentblatt 88/24**

(84) Benannte Vertragsstaaten:
**CH DE FR GB IT LI**

(56) Entgegenhaltungen:
**DE-A-3 130 127**
**DE-A-3 130 370**
**DE-A-3 243 313**
**FR-A-2 385 178**
**US-A-4 051 794**
**US-A-4 069 778**

(73) Patentinhaber: **Schips, Helmut**
**Steinacher Strasse 340**
**CH-9372 Tübach (CH)**

(72) Erfinder: **Müller, Ernst**
**Steinacherstrasse 340**
**CH-9327 Tübach (CH)**

(74) Vertreter: **Patentanwälte Phys. Bartels Dipl.-Ing.**
**Fink Dr.-Ing. Held**
**Lange Strasse 51**
**D-7000 Stuttgart 1 (DE)**

**Beschreibung**

Bei vielen Industrienähmaschinen ist die zugehörige elektronische Steuereinrichtung in einem an der Nähmaschine angebrachten Gehäuse enthalten, das in seiner Frontplatte die für eine Programmeingabe und den Programmabruf erforderlichen Tasten trägt. Die Programmierung und Programmänderungen, die sowohl beim Übergang von einem Artikel auf einen anderen als auch beim Übergang von einer Konfektionsgröße zur anderen des selben Artikels notwendig sind, müssen an der Maschine vorgenommen werden. Dies ist nicht nur insofern nachteilig, als vielfach die Bedienungsperson der Nähmaschine, beispielsweise eine Näherin, Schwierigkeiten bei der Programmierung hat oder diese nicht selbst vornehmen kann. Hinzu kommt, daß die Gefahr relativ groß ist, daß bei der Programmierung Fehler unterlaufen. Ein weiterer, schwerwiegender Nachteil besteht darin, daß die Zeit, welche für eine neue programmierung benötigt wird, und damit auch die Zeit, während deren die Maschine für die Produktion ausfällt, relativ groß ist.

Frei von diesen Nachteilen ist eine bekannte Stickerei-Nähmaschine (DE-A-32 43 313), da sie eine Lesestation aufweist, in die eine Diskette einlegbar ist, welche das Programm enthält, gemäß dem ein das Nähgut enthaltender Stützrahmen in zwei Koordinaten bewegt wird. Zwar ist diese Nähmaschine auch mit einer Tastatur und einem Display versehen, und mittels dieser Tastatur kann nicht nur das Auslesen des Programmes veranlaßt, sondern auch das Einlesen von Daten für den Nähvorgang bewirkt werden. Das Einlesen des Nähprogrammes braucht jedoch nicht an der Nähmaschine zu erfolgen, da eine separate Steuervorrichtung mit einem Diskettenlaufwerk, einem Bildschirm, einer Tastatur, einem Festwertspeicher und einer Zentraleinheit vorhanden ist, die an eine Koordinatenlesevorrichtung und eine Stellvorrichtung angeschlossen ist und damit alle Vorraussetzungen für eine Programmeingabe und Abspeicherung dieses Programmes auf einer Diskette durch eine hierfür qualifizierte Person ermöglicht, ohne die Nutzung der Nähmaschine zu beeinträchtigen. Die Bedienungsperson der Nähmaschine braucht deshalb nur die richtige Diskette auszuwählen und einzulegen sowie bei einer Änderung des Nähprogramms auszutauschen.

Bei einer anderen bekannten Industrienähmaschine (US-A-4 051 794) ist zwar die zugehörige elektronische Steuereinrichtung in einem an der Nähmaschine vorgesehenen Gehäuse untergebracht. Jedoch ist der programmierbare Festwertspeicher, in dem das Nähprogramm gespeichert ist, mit Steckkontakten versehen und deshalb leicht austauschbar. Ferner enthält dieser Festwertspeicher zwei Speicherteile, die mittels eines manuell betätigbaren Schalters oder eines Fußschalters· anwählbar sind. Sofern das zu speichernde Nähprogramm nicht beide Speicherteile benötigt, können deshalb zwei unterschiedliche Nähprogramme, beispielsweise zwei Nähprogramme für unterschiedliche Konfektionsgrößen eines bestimmten Artikels, abgespeichert und bequem abgerufen werden. Da jedoch in der Regel die Zahl der unterschiedlichen Konfektionsgrößen eines Artikels wesentlich größer als zwei ist, muß die Bedienungsperson dieser Nähmaschine häufig den Festwertspeicher wechseln. Dabei besteht die Gefahr, daß nicht der richtige Speicher ausgewählt wird, zumal keine Anzeige darüber erfolgt, welcher Festwertspeicher eingesteckt ist.

Der Erfindung liegt die Aufgabe zugrunde, eine elektronische Steuereinrichtung für Industrienähmachinen zu schaffen, welche den Übergang von einem Nähprogramm zu einem anderen mit möglichst geringem Zeitaufwand und einem möglichst kleinen Fehlerrisiko ermöglicht. Diese Aufgabe löst eine Steuereinrichtung mit den Merkmalen des Anspruches 1.

Die erfindungsgemäße Steuereinrichtung macht einen Austausch des Schreib/Lese-Speichers nur dann erforderlich, wenn ein anderer Artikel genäht werden soll. Die Zahl der Speicherwechsel ist deshalb gering, was auch die Gefahr reduziert, einen falschen Speicher auszuwählen. Da außerdem das ausgewählte Programm auf dem Display angezeigt wird, besteht nicht die Gefahr, daß der Nähvorgang mit einem falschen Programm ausgeführt wird. Für den Übergang von einer Konfektionsgröße zur anderen braucht nur über die Tastatur die Kennzeichnung der gewünschten Konfektionsgröße, beispielsweise deren Nummer, eingegeben zu werden. Auch diese Kennzeichnung wird zu Kontrollzwecken auf dem Display angezeigt. Trotz der Abspeicherung der unterschiedlichen Nähprogramme für die in der Regel beträchtliche Anzahl unterschiedlicher Konfektionsgrößen eines Artikels in einem einzigen Schreib/Lese-Speicher ist dieser so klein, daß er in einer bequem zu handhabenden Kassette untergebracht werden kann. Die relativ geringe Speicherkapazität, die der Schreib/Lese-Speicher benötigt, was auch im Hinblick auf seine Kosten vorteilhaft ist, ist durch die optimale Nutzung seiner Speicherkapazität bedingt. Diese ergibt sich daraus, daß die Programmschritte ohne die bei unterschiedlichen Konfektionsgrößen unterschiedlichen Stichzahlen getrennt von den zugehörigen Stichzahlen abgespeichert sind und die Vervollständigung des Programmes mit den zugehörigen Stichzahlen erst beim Auslesen mit ·Hilfe des Mikroprozessors erfolgt.

Da die zu Gruppen zusammengefaßten Speicher nur Stichzahlen zu speichern brauchen, sind ihnen vorzugsweise Zähler zugeordnet.

Bei einer bevorzugten Ausführungsform ist ein separates Programmiergerät mit einer Kassettenaufnahme vorgesehen, die entsprechend der Kassettenaufnahme des an der Nähmaschine anzuordnenen Teil der Steuereinrichtung ausgebildet ist. Ein solches separates Programmiergerät ergibt nicht nur den Vorteil der Ortsunabhängigkeit. Es eröffnet auch die Möglichkeit, den an der Nähmschine vorzusehenden Teil der Steuereinrichtung auf die unbedingt erforderlichen Komponenten, beispielsweise eine vereinfachte Tastatur und Anzeigeeinrichtung, zu beschränken und nur das Programmiergerät aufwendiger, insbesondere mit einem höheren Bedienungskomfort, auszubilden. Der hierfür erforderliche Mehraufwand ist dann wesentlich geringer, als wenn an jeder Nähmaschine dieser Mehraufwand auftreten würde. Vorteilhafterweise ist das Programmiergerät mit einer zweiten Kassettenaufnahme versehen, um in einfacher Weise das programm von einer Kassette auf eine andere umkopieren zu können.

Im folgenden ist die Erfindung anhand eines in der Zeichnung dargestellten Ausführungsbeispiels im einzelnen erläutert. Es zeigen:

Fig. 1 eine schematisch dargestellte Ansicht einer Industrienähmaschine mit einem Ausführungsbeispiel des fest mit der Nähmaschine verbundenen Teils der erfindungsgemäßen Steuereinrichtung,

Fig. 2 eine perspektivisch dargestellte Ansicht des mit der Nähmaschine verbundenen Teils der Steuereinrichtung und einer in dessen Aufnahme eingesteckten Kassette,

Fig. 3 eine perspektivisch dargestellte Ansicht der Kassette mit Blickrichtung auf die die Steckverbindungselemente aufweisende Seite,

Fig. 4 ein unvollständig dargestelltes Blockschaltbild des Ausführungsbeispiels,

Fig. 5 eine Ansicht der Frontplatte eines Ausführungsbeispiels eines Programmiergerätes.

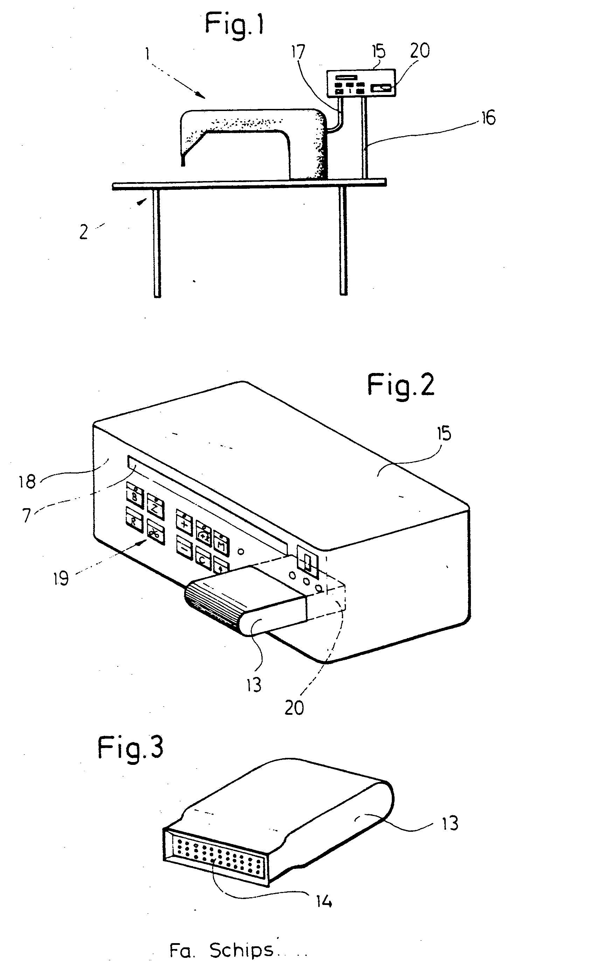

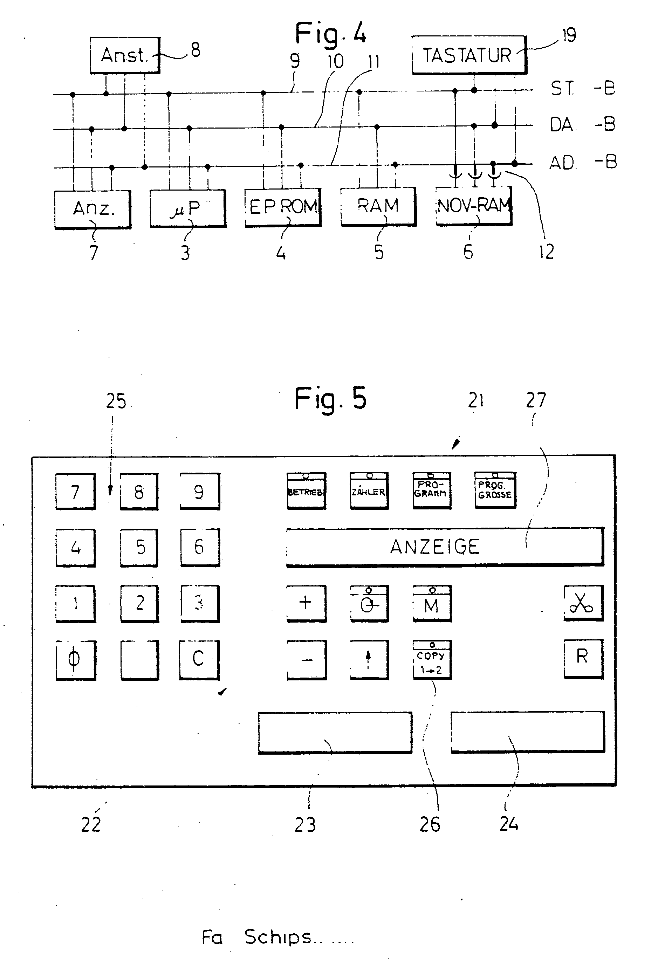

Eine Industrienähmaschine von der in Fig. 1 nur schematisch der Nähkopf 1 und der den Nähkopf 1 tragende Tisch 2 dargestellt ist, ist zur Steuerung des Nähkopfes 1, seines Antriebs und der nicht dargestellten Zusatzeinrichtungen wie Fadenabschneider, Etikettvorleger, Stapler und dergleichen, mit einer elektronischen Steuereinrichtung ausgerüstet. Diese weist, wie Fig. 4 zeigt, einen Mikroprozessor 3, ein EPROM 4, also einen programmierbaren Festwertspeicher mit Löschmöglichkeit, einen im folgenden als RAM bezeichneten Schreib/Lese-Speicher 5, einen im folgenden als NOV-RAM bezeichneten, nicht batteriegepufferten, nicht flüchtigen Schreib/Lese-Speicher 6 und eine Anzeigeeinrichtung 7 auf, bei der es sich im Ausführungsbeispiel um eine 32-Charakter-LCD-Anzeige handelt. Der zur Ansteuerung des Nähkopfes 1 und dessen Antrieb sowie der Zusatzgeräte erforderliche Teil der Steuereinrichtung ist als Ganzes mit 8 bezeichnet. Wie Fig. 4 zeigt, sind die vorstehend beschriebenen Komponenten der Steuereinrichtung mit Ausnahme des NOV-RAM 6 über einen Steuerbus 9, einen Databus 10 und einen Adressbus 11 in fester Verschaltung miteinander verbunden.

Hingegen ist das NOV-RAM 6 über eine als Ganzes mit 12 bezeichnete, 25-polige Steckverbindung mit den vorstehend genannten Bussen verbindbar und von ihnen trennbar, da das NOV-RAM 6 in einer Kassette 13 angeordnet ist, die, wie Fig. 3 zeigt, ein quaderähnliches Kunststoffgehäuse hat. Die eine Schmalseite dieses Gehäuses trägt fünfundzwanzig Steckbuchsen 14 der Steckverbindung 12.

Der Mikroprozessor 3, das EPROM 4, das RAM 5, die Anzeige 7 und der Ansteuerteil 8 sind in einem Gehäuse 15 enthalten, das, wie Fig. 1 zeigt, im Ausführungsbeispiel von einem am Tisch 2 befestigten Halter 16 getragen wird. Vom Gehäuse 15 führen Steuerleitungen 17 zum Nähkopf 1, dessen Antrieb sowie zu den Zusatzgeräten. Die Frontplatte 18 des Gehäuses 15 trägt, wie insbesondere Fig. 2 zeigt, die Anzeige 7. Ferner trägt die Frontplatte 18 eine Tastatur 19, welche ebenfalls an die Busse 9, 10 und 11 angeschlossen ist. Mittels der Tasten der Tastatur 19 können die für die Programmierung und Steuerung erforderlichen Befehle eingegeben werden. Ferner ist die Frontplatte 18 mit einer Zugangsöffnung zu einer Kassettenaufnahme 20 versehen, die hinsichtlich Form und Größe an die Kassette 13 angepaßt ist und fünfundzwanzig vertieft liegende Steckerstifte in einer solchen Anordnung enthält, daß diese beim Einführen der Kassette 13 in die Kassettenaufnahme 20 in die Steckbuchsen 14 eindringen und damit das NOV-RAM 6 mit den Bussen 9, 10 und 11 verbindet.

Das NOV-RAM 6 enthält außer einem Speicherteil, in welchem die Programmschritte für einen bestimmten Artikel ohne die bei unterschiedlichen Konfektionsgrößen unterschiedlichen Stichzahlen speicherbar sind. Außerdem enthält das NOV-RAM 6 mehrere Gruppen von Speichern sowie von Zählern, von denen je einer jedem Speicher zugeordnet ist. Jede Speichergruppe ist einem der Programmschritte zugeordnet. Jeder Speicher einer Gruppe enthält die unterschiedlichen Stichzahlen der verschiedenen Konfektionsgrößen des betreffenden Artikels.

Für das Nähen eines bestimmten Artikels wird diejenige Kassette 13, in deren NOV-RAM 6 das zugehörige Nähprogramm gespeichert ist, in die Kassettenaufnahme 20 eingesteckt. Die Auswahl der Speicher, in denen die Stichzahlen zu der von diesem Artikel zu nähenden Konfektionsgröße gespeichert sind, wird durch die Eingabe der Konfektionsgröße mit Hilfe der Tastatur 19 ausgewählt. Damit werden während des Programmablaufes nur die zu dieser Konfektionsgröße gehörenden Stichzahlen aus diesen Speichern abgefragt. Mit Hilfe der Zähler werden die entsprechenden Stichzahlen gezählt, damit dann, wenn die ahgefragte Stichzahl erreicht ist, der nun zu gebende Befehl ausgelöst wird.

Beim Übergang zu einer anderen Konfektionsgröße desselben Artikels braucht nur vor Beginn des ersten Programmschrittes mittels der Tastatur 10 die neue Konfektionsgröße eingegeben oder ausgewählt zu werden.

Es ist zwar möglich, die Programmierung des NOV-RAM 6 mit Hilfe der Tastatur 19 an einer Nähmaschine vorzunehmen, wenn die zugehörige Kassette in die Kassettenaufnahme 20 eingesteckt ist. Vorteilhafter ist jedoch eine Programmierung mit Hilfe eines zusätzlich vorgesehenen Programmiergerätes 21, von dem in Fig. 5 nur die Frontplatte, die von dieser getragene Tastatur 22, die Anzeige 27 sowie die beiden Zugangsöffnungen 23 und 24 zu zwei Kassettenaufnahmen dargestellt sind, welche beide wie die Kassettenaufnahme 20 ausgebildet sind. Das Programmiergerät enthält einen Mikroprozessor und die erforderlichen Speicher. Seine Tastatur 22 unterscheidet sich von der Tastatur 19 im wesentlich durch einen Ziffernblock 25 zur Zahleneingabe sowie durch eine Taste 26 zur Eingabe eines Kopierbefehles.

Zum Programmieren wird eine Kassette 13 in die über die Zugangsöffnung 23 zugängliche Kassettenaufnahme eingesetzt. Für einen Kopiervorgang wird eine zweite Kassette in die der zweiten Kassettenaufnahme zugeordnete Zugangsöffnung 24 eingesteckt.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Elektronische Steuereinrichtung für Industrienähmaschinen, welche folgende Merkmale aufweist:

a) ein Display als alphanumerische Anzeige (7),

b) eine Tastatur (19) für die Eingabe von zur Steuerung und programmierung erforderlicher Befehle,

c) einen Mikroprozessor (3) und einen programmierbaren Festwertspeicher (4),

d) ein ungepuffertes NOV-RAM (6) als Schreib/Lese-Speicher, das in einer auswechselbaren Kassette (13) angeordnet ist, die Steckverbindungselemente (14) aufweist, welche in korrespondierend ausgebildete Gegen-Steckverbindungselemente einer Kassettenaufnahme (20) der Steuereinrichtung einsteckbar sind,

e) das NOV-RAM (6) enthält einen Speicherteil für die Programmschritte eines zu nähenden Konfektionsartikels ohne die bei unterschiedlichen Konfektionsgrößen unterschiedlichen Stichzahlen und eine der maximalen Zahl von ausführbaren Programmschritten entsprechende Anzahl von Speichergruppen, die je eine der Anzahl der unterschiedlichen Konfektionsgrößen entsprechende Anzahl von Speichern für die zum Programmschritt gehörenden Stichzahlen der einzelnen Konfektionsgrößen enthält, wobei jeweils der einer bestimmten Konfektionsgröße zugeordnete Speicher jeder Speichergruppe bei der Eingabe der Konfektionsgröße mittels der Tastatur ausgewählt wird.

2. Elektronische Steuereinrichtung nach Anspruch 1, dadurch gekennzeichnet, daß den der Speicherung der Stichzahlen dienenen Speichern je ein Zähler zugeordnet ist.

3. Elektronische Steuereinrichtung nach Anspruch 1 oder 2, gekennzeichnet durch ein Programmiergerät (21) mit einer Kassettenaufnahme, die entsprechend der Kassettenaufnahme (20) des an der Nähmaschine anzuordnenden Teils der Steuereinrichtung ausgebildet ist.

4. Elektronische Steuereinrichtung nach Anspruch 3, gekennzeichnet durch eine zweite Kassettenaufnahme des Programmiergerätes (21) für die Aufnahme einer zweiten Kassette zur Durchführung eines Kopiervorganges.

## Revendications

1. Dispositif de commande électronique pour des machines à coudre industrielles, qui possède les caractéristiques suivantes:

a) un dispositif d'affichage réalisé sous la forme d'un dispositif d'affichage alphanumérique (7),

b) un clavier (19) servant à introduire des instructions nécessaires pour la commande et la programmation,

c) un microprocesseur (3) et une mémoire morte programmable (4),

d) une mémoire NOV-RAM (6) non tamponnée formant mémoire d'enregistrement/lecture, qui est disposée dans une cassette interchangeable (13) comportant des éléments de liaison à enfichage (14), qui peuvent être enfichés dans des éléments de liaison à enfichage antagonistes, agencés de façon correspondante, d'un logement de cassette (20) du dispositif de commande,

e) la mémoire NOV-RAM (6) contient une partie mémoire pour les pas de programme d'un article de confection devant être cousu, sans les nombres de points, qui sont différents pour différentes tailles de confection, et un nombre, correspondant au nombre maximum de pas de programme pouvant être exécuté, de groupes de mémoire qui contiennent chacun un nombre, correspondant au nombre des différentes tailles de confection, de mémoires servant à mémoriser les nombres de points, associés au pas de programme, des différentes tailles de confection, auquel cas la mémoire, associée à une taille déterminée de confection, de chaque groupe de mémoire est sélectionnée respectivement lors de l'introduction de la taille de confection à l'aide du clavier.

2. Dispositif de commande électronique selon la revendication 1, caractérisé en ce qu'un compteur est associé à chacune des mémoires utilisées pour mémoriser les nombres de points.

3. Dispositif de commande électronique selon la revendication 1 ou 2, caractérisé par un appareil de programmation (21) comportant un logement de cassette, qui est agencé de manière à correspondre au logement de cassette (20) de la partie du dispositif de commande, devant être installée sur la machine à coudre.

4. Dispositif de commande électronique selon la revendication 3, caractérisé par un second logement de cassette de l'appareil de programmation (21) servant à recevoir une seconde cassette pour l'exécution d'une opération de copiage.

## Claims

1. Electronic control device for industrial sewing machines, having the following characteristics:

a) a display as an alphanumeric indication (7),

b) keys (19) for inputting commands required for control and programming,

c) a microprocessor (3) and a store for constant values (4), which can be programmed,

d) A NOV-RAM (6) without a buffer as a read-write memory, which is arranged in an exchangeable cassette (13), which is provided with plug connection components (14), which can be plugged into correspondingly formed counter plug connection components of a cassette pick-up unit (20) of the control device,

e) the NOV-RAM (6) contains a storage section for the programme steps of a ready-made article to be sewn without the different numbers of stitches for different ready-made sizes and a number of store groups corresponding to the maximum number of programme steps which can be carried out, whereby the store groups in each case contain a number of stores for the number of stitches of the individual ready-made sizes associated with the programme step, which corresponds to the number of the different ready-made sizes and whereby in each case the store of each group of stores associated with a predetermined ready-made size is selected by means of the keyboard, when the ready-made size is inputted.

2. Electronic control device according to claim 1, characterised in that a counter is in each case associated with the stores used for storing the numbers of stitches.

3. Electronic control device according to claim 1 or 2, characterised by a programming unit (21) with a cassette pick-up unit, which is constructed according to the cassette pick-up unit (20) of the part of the control device to be arranged at the sewing machine.

4. Electronic control device according to claim 3, characterised by a second cassette pick-up unit of the programming unit (21) for picking up a second cassette for carrying a copying operation.

## Fig.1

## Fig.2

## Fig.3

Fa. Schips

## Fig. 4

Anst. — 8

TASTATUR — 19

9  10  11

ST. -B

DA. -B

AD. -B

| Anz. | μP | EPROM | RAM | NOV-RAM |

7   3   4   5   6   12

## Fig. 5

25   21   27

| 7 | 8 | 9 |
| 4 | 5 | 6 |
| 1 | 2 | 3 |
| Ø |  | C |

| BETRIEB | ZÄHLER | PRO-GRAMM | PROG. GROSSE |

ANZEIGE

| + | ⊕ | M |   ✂ |
| − | ↑ | COPY 1→2 |   R |

22   23   26   24

Fa  Schips.. ....

2